# EUROPEAN PATENT APPLICATION

(11) **EP 4 730 736 A1**
(43) Date of publication of application: **22.04.2026**
(21) Application number: 24207919.2
(22) Date of filing: 21.10.2024
(51) Int. Cl.: H04L 41/14, H04L 41/16

(54) **METHODS, COMPUTER PROGRAMS, AND APPARATUSES FOR ENABLING MACHINE LEARNING ENHANCED DATA ANALYTICS AND AN AGENT FUNCTION IN A TELECOMMUNICATION SYSTEM**

(71) Applicant: Deutsche Telekom AG, 53113 Bonn (DE)
(72) Inventor: BLICKER, Stephan, 53343 Wachtberg (DE)
(74) Representative: 2SPL Patentanwälte PartG mbB

(57) **Abstract**

Examples relate to a method, a computer program, and an apparatus for enabling machine learning enhanced data analytics and an agent function. The method (10) for enabling machine learning-based data analytics in a telecommunication system (400) comprises obtaining (12) data records to be analyzed from one or more network functions of the telecommunication system (400). The method (10) further comprises vectorizing (14) the data records, storing (16) the data in a vectorized manner in a data storage, and providing (18) the vectorized data for data analytics upon request from a data analytics function in the telecommunication system (400).

## Description

### Field

Examples relate to a method, a computer program, and an apparatus for enabling machine learning enhanced data analytics and an agent function, more particularly, but not exclusively, to a concept for enabling machine learning based data analytics in a telecommunication system by vectorizing data records and using them for embedding into machine learning.

### Background

Data analytics in a telecommunication system involves the systematic examination of vast amounts of network data to uncover insights, optimize performance, and enhance service quality. Telecommunication networks generate enormous quantities of data from various sources, including customer usage patterns, network traffic, call records, and device diagnostics. Through data analytics, this information can be processed and analyzed to identify trends, predict potential issues, and improve network efficiency. For instance, predictive analytics can forecast equipment failures or network congestion, allowing proactive maintenance and reducing downtime. Customer behavior analysis helps providers personalize services, improve customer satisfaction, and reduce chum. Additionally, data analytics is instrumental in detecting security threats, fraud, and anomalies by identifying unusual patterns in network activity. By leveraging advanced analytics techniques such as machine learning, real-time monitoring, and big data platforms, telecommunication companies can make data-driven decisions that enhance operational efficiency, reduce costs, and deliver better service experiences to users.

NWDAF (Network Data Analytics Function) is a key component in modem 5G (5^{th} generation) telecommunication systems designed to provide advanced data analytics capabilities across the network. It plays a critical role in collecting, processing, and analyzing network data to enable better decision-making and optimize network operations. NWDAF allows network operators to gain real-time insights into network performance, user behavior, and service quality by leveraging big data analytics and machine learning algorithms. One of its primary functions is to enhance network automation by predicting issues such as traffic congestion, resource shortages, or potential security threats, allowing for proactive measures to be taken. NWDAF also supports dynamic network slicing, which enables the customization of network resources for specific use cases like IoT (Internet of Things), ultra-reliable low-latency communications (URLLC), or enhanced mobile broadband (eMBB). By providing actionable insights and analytics to other network functions, NWDAF significantly improves network efficiency, reduces operational costs, and ensures a high-quality user experience in the evolving 5G ecosystem.

### Summary

It is a finding of the present disclosure that data analytic services can be enhanced by using machine learning models. Furthermore, to enable utilization of machine learning models vectorizing the data is beneficial. Such vectorized data can then be stored in a data storage and made available. If data analytics requests and data stored for the analytics are both vectorized, they can be evaluated for similarity and/or combined for embedding in machine learning model such as a neural network. It is a further finding that for vectorizing the data a data agent function can be used. Such data agent function can then provide data services for accessing the data storage.

Examples therefore provide a method for enabling machine learning-based data analytics in a telecommunication system. The method comprises obtaining data records to be analyzed from one or more network functions of the telecommunication system. The method further comprises vectorizing the data records and storing the data in a vectorized manner in a data storage. The method also includes providing the vectorized data for data analytics upon request from a data analytics function in the telecommunication system. Examples enable data analytics based on vectorized data, which may enhance performance of analytics based on machine learning.

In some examples the method further comprises obtaining further data records from application functions in and outside the telecommunication system and/or obtaining further data records from operation and maintenance of the telecommunication system. That way, comprehensive data can be provided for analytics in some examples. The vectorizing may comprise splitting the data records in chunks of data. The chunks of data may comprise relevant vector data of the data records. That way the data can be provided in a granularity and format that is adapted to the required analytics. For example, the data analytics are based on a large language model, LLM, and natural language processing, NLP. The relevant vector data can be configured to enable embedding of the vector data into an LLM. The LLM performance may be enhanced in some examples. In further examples the method may comprise receiving the request from a network agent function. The request comprises vectorized data about an intent of the request. Therewith examples enable an interaction with an according agent function in the network, which will be detailed subsequently.

The method may further include processing the vectorized data from the data storage for similarities between the vectorized data about the intent and the data in the data storage. That way similar data can be found that is relevant for the intent. The providing of the vectorized data may comprise providing a configurable number of similar vectors. A selection of similar vectors may be provided for further processing. In examples, the vectorized manner may be one out of multiple different vector formats, which are configurable by a network function and/or which depend on a format of the data records. That way a variety of intent and formats may be served in examples. In further examples, the obtaining of the data records may comprise communicating with a gateway of the telecommunication system. This may enable getting data records from outside the network via the gateway. Moreover, the data records may comprise subscriber-related and/or non-subscriber-related data. Examples may enable efficient machine-learning-based analytics that can be based on subscriber-related data, on non-subscriber-related data, or on a combination of both.

Examples further provide a method for an agent function of a telecommunication system. The method comprises obtaining a request to analyze data from a data storage. The request comprises information about an intent of the request. The method further comprises processing the request to obtain information about relevant aspects of the intent and vectorizing the information about the relevant aspects. The method further includes accessing a data storage based on the vectorized data. As outlined above, the vectorized data may enhance performance of machine learning based data analytics. For example, an LLM may be used to obtain an analysis result for the request. In further examples the accessing may further comprise receiving a configurable number of data vectors from the data storage, where the data vectors fulfill a predetermined similarity criterion with respect to the vectorized data. That way a selection of similar data vectors can be taken into account for the further processing. For example, the configurable number of data vectors may be combined to obtain an embedding vector for invocation of the LLM.

Another example is a computer program having a program code for performing one of the methods described herein, when the computer program is executed on a computer, a processor, or a programmable hardware component.

Another example is an apparatus for a telecommunication system. The apparatus comprises one or more interfaces configured to communicate with or within the telecommunication system and one or more processing devices, which are configured to perform one of the methods described herein.

A telecommunication system is another example comprising an example of an apparatus as described above.

### Brief description of the Figures

Some examples of apparatuses, methods, and/or computer programs will be described in the following by way of example only, and with reference to the accompanying figures, in which
Fig. 1 shows a block diagram of an example of a method for enabling machine learning based data analytics in a telecommunication system;
Fig. 2 shows a block diagram of an example of a method for an agent function in a telecommunication system;
Fig. 3 illustrates a block diagram of an example of an apparatus for a telecommunication system;
Fig. 4 depicts an overview of a data storage structure for analytics and collected data in 3GPP;
Fig. 5 shows a block diagram of a data collection architecture (training and interference);
Fig. 6 illustrates a block diagram of an example of a data storage architecture;
Fig. 7 depicts data collection and pre-processing in an example;
Fig. 8 shows a data collection architecture in an example;
Fig. 9 illustrates an agent function in an example;
Fig. 10 depicts a message flow in an example.

### Detailed Description

Some examples are now described in more detail with reference to the enclosed figures. However, other possible examples are not limited to the features of these examples described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

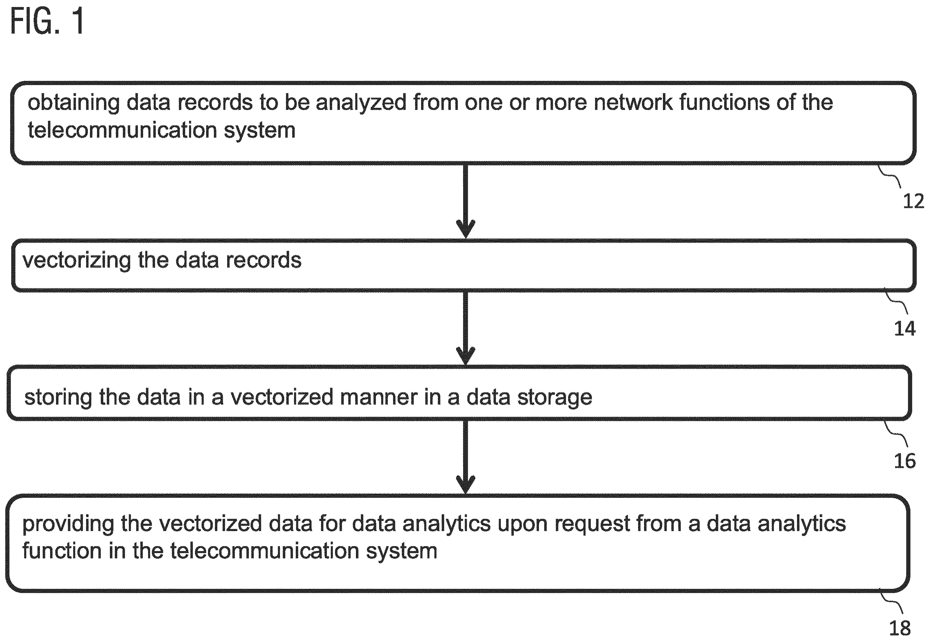

Fig. 1 shows a block diagram of an example of a method 10 for enabling machine learning based data analytics in a telecommunication system. The method 10 comprises obtaining 12 data records to be analyzed from one or more network functions of the telecommunication system. The method further comprises vectorizing 14 the data records and storing 16 the data in a vectorized manner in a data storage. The method 10 further comprises providing 18 the vectorized data for data analytics upon request from a data analytics function in the telecommunication system.

For example, a data record may be in one of the following data formats, CSV (comma-separated values), pdf (portable data format), html (hypertext markup language), json (JavaScript object syntax,), excel, etc.

Machine learning-based data analytics in a telecommunication system leverages advanced algorithms to analyze vast amounts of network data, enabling smarter, more efficient decision-making and optimization. By using machine learning models, telecom operators can automatically detect patterns, predict network behaviors, and identify anomalies that may indicate issues such as potential service outages, fraud, or security breaches. These models are trained on historical data, allowing them to learn complex relationships and trends, which can then be applied to real-time data for predictive analytics. For example, machine learning can forecast network congestion, enabling proactive traffic management, or predict equipment failures to allow for preventative maintenance. Additionally, machine learning enhances customer experience by personalizing services based on user behavior, optimizing resource allocation, and improving network quality through self-healing networks. This approach significantly increases operational efficiency, reduces downtime, and improves the overall reliability of telecommunication systems.

In examples, the data records may comprise subscriber related data, non-subscriber related data or a combination of both. Furthermore, at least in some examples different data bases may be used for storing subscriber related data and non-subscriber related data.

Non-subscriber-related data in a telecommunication system refers to information that is generated by or associated with the network's infrastructure and operations, rather than by individual subscribers. This data includes metrics such as network performance indicators, traffic flow information, signal strength measurements, equipment status, and environmental conditions affecting network elements like base stations or routers. It also encompasses operational data related to network maintenance, fault detection, and resource allocation. Non-subscriber data is crucial for the effective management and optimization of the network, as it provides insights into the overall health, efficiency, and capacity of the system. By analyzing this data, network operators can make informed decisions regarding infrastructure upgrades, detect and resolve issues before they impact user experience, and improve the reliability and scalability of the network without relying on subscriber-specific data, ensuring both operational excellence and privacy. Non-subscriber related data may also be obtained from outside the network, e.g. through respective gateways or interfaces.

Subscriber-related data in a telecommunication system refers to information associated with individual users or customers of the network. This data includes personal details such as subscriber identity (e.g., SIM (Subscriber Identity Module) -card information, IMSI (International Mobile Subscriber Identity) numbers), contact information, billing records, and usage patterns like call history, text messaging, and data consumption. It also encompasses service preferences, subscription plans, and the devices connected to the network. Subscriber-related data is essential for managing and delivering personalized services, as well as for billing, customer support, and network provisioning. In modem networks, especially in 4G and 5G environments, subscriber data is also used for real-time service customization, such as bandwidth allocation or quality of service adjustments. Due to its sensitive nature, subscriber data is subject to strict privacy and security regulations, ensuring that operators protect user information and comply with data protection laws like GDPR (General Data Protection Regulation). At least in some examples subscriber related data may also be obtained from outside the network, e.g. through respective gateways or interfaces.

In some examples the vectorizing 14 of the data records, e.g. to obtain its relevant features, may obtain a feature vector of the data records and the data base may store these feature vectors, optionally together with the data record. A feature vector is a mathematical representation of a data record in the form of an array or list of numerical values, where each value corresponds to a specific attribute or characteristic of the data record, e.g. referring to an object and/or entity. In the context of machine learning, data analysis, or pattern recognition, feature vectors serve as the input to algorithms that learn patterns or make predictions. Each element of the vector represents a different feature, such as the relevant features of the data records, e.g. signal strength, frequency, location, entity address, and noise level in the telecommunication system. Feature vectors are essential because they translate complex, real-world data into a standardized numerical format that models can process. The quality and relevance of the features in the vector directly impact the performance of the algorithm, making feature selection and engineering key steps in the development of robust models. In examples, the vectorized manner may be one out of multiple different vector formats, which are configurable by a network function and/or which depend on a format of the data records, the tokenization of the records and the utilized algorithms for creating embeddings. Some known algorithms for vectorization are Word2Vec (Word2vec is a technique in natural language processing (NLP) for obtaining vector representations of words) and GloVe (Global Vectors for Word Representation).

In principle, any kind of data base may be used in examples to store the vectorized data. In a telecommunication system, various types of data bases can be used to store and manage the relevant features of configuration and incident tickets, ensuring efficient tracking and retrieval of information. "Relational data bases", such as MySQL or PostgreSQL, are commonly used due to their structured nature, allowing for the organization of ticket data into tables with defined relationships. This makes it easy to query and generate reports on ticket status, priorities, and resolution times. "NoSQL data bases", like MongoDB or Cassandra, are useful for handling large volumes of unstructured or semi-structured data, offering greater flexibility and scalability for storing complex ticket information with varying fields and formats. "Graph data bases", such as Neo4j, can also be employed to model the intricate relationships between different network components and incidents, enabling quick identification of patterns or correlations that could aid in problem resolution. Cloud-based data bases provide the advantage of scalability, accessibility, and reduced infrastructure management, making them ideal for large, distributed telecommunication networks. Each database type offers unique strengths depending on the specific requirements for data structure, scalability, and querying within the telecommunication system.

A feature vector store, as an example of a data base, is a specialized data base or storage system designed to store, manage, and retrieve feature vectors, which are essential components in machine learning and data analytics workflows. Feature vector stores are optimized for high-performance querying, allowing fast access to feature vectors when needed for training, validation, or inference by machine learning models. These stores typically provide version control, ensuring that feature vectors used in different stages of the machine learning lifecycle can be accurately tracked and reproduced.

Additionally, they often integrate with pipelines for feature extraction and transformation, making it easier to manage the feature engineering process at scale. By centralizing the storage of feature vectors, these systems enable efficient reuse, reduce redundancy, and facilitate collaboration between data scientists and engineers. Feature vector stores are essential in environments where large-scale machine learning operations require consistency and scalability, such as in telecommunication systems, recommendation engines, or predictive analytics.

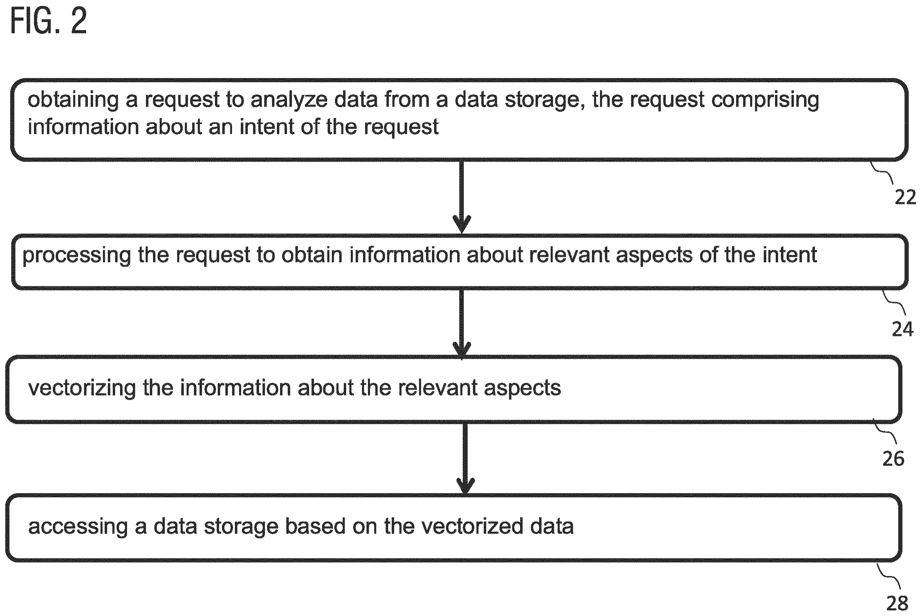

Fig. 2 shows a block diagram of an example of a method 20 for an agent function in a telecommunication system. The method comprises obtaining 22 a request to analyze data from a data storage. The request comprises information about an intent of the request. The method 20 further comprises processing 24 the request to obtain information about relevant aspects of the intent. The method 20 further includes vectorizing 26 the information about the relevant aspects and accessing 28 a data storage based on the vectorized data.

In a telecommunication system an agent function refers to a software or hardware component that autonomously performs specific tasks to manage, monitor, and optimize network operations. Agents are typically deployed across various network elements, such as routers, switches, or base stations, to collect data, execute commands, and interact with other system components. These agents often play a key role in tasks such as fault detection, resource allocation, traffic management, and performance monitoring. By continuously gathering information and responding to network conditions in real-time, they help ensure the network operates smoothly and efficiently. Agents can also communicate with central management systems to report issues, trigger alarms, or suggest corrective actions, enabling automated responses to network events. In more advanced applications, such as 5G (5^{th} generation) networks, agents support functions like network slicing, dynamic provisioning, and self-healing, making them critical to the adaptive, scalable, and resilient nature of modem telecommunication systems.

A network function in a telecommunication network refers to a specific process or task that is essential for the operation, management, and delivery of communication services. These functions include activities like routing, switching, firewalling, load balancing, and signal processing, which collectively enable the flow of voice, data, and video across the network. Traditionally, these functions were implemented using dedicated hardware, but with the evolution of "Network Function Virtualization (NFV)", many network functions are now deployed as software on virtualized platforms, allowing for greater flexibility, scalability, and cost-efficiency. Key examples of network functions include "Session Border Controllers (SBCs)" for managing VoIP traffic, "Packet Data Network Gateways (PGWs)" in mobile networks for managing data connections, and "baseband processing" for handling wireless signals. In modem telecommunication systems, network functions are often managed dynamically through software-defined networking (SDN) and NFV, enabling rapid service deployment, real-time network optimization, and improved resource utilization across 5G and cloud-based networks.

The above agent function may offer services to network functions, in particular to machine learning-based data analytic functions. Requests of a network function in a telecommunication network may refer to certain services supporting data analytics, such a retrieval, storage or comparison of data. These requests are processed through virtualized or physical network functions, such as firewalls, routers, or gateways, which respond by performing the required operations. The coordination of network function requests is essential for ensuring seamless service delivery, maintaining network security, and optimizing resource usage in real-time. This process is often managed by central controllers in Software-Defined Networking (SDN) and Network Function Virtualization (NFV) environments, allowing for greater automation and flexibility in responding to varying network demands.

The intent of data analytics requests within a network function in a telecommunication network is to gather insights and actionable information from the vast amounts of data generated by the network. These requests are made to monitor network performance, detect anomalies, predict potential issues, and optimize operations. By analyzing data related to traffic patterns, user behavior, network load, or equipment health, network operators aim to improve the efficiency, reliability, and scalability of the network. For instance, data analytics requests may be used to identify network congestion and trigger dynamic resource allocation, or to predict hardware failures and schedule preventative maintenance. In more advanced applications, such as in 5G networks, data analytics requests can help with real-time decision-making, such as automatically adjusting network slices to accommodate changing user demands. Ultimately, the intent behind these requests is to enhance service quality, reduce downtime, ensure network security, and provide a seamless user experience by leveraging data-driven insights. As outlined above, examples may analyze the intent of such a request and determine a vectorized representation of the intent, e.g. a feature vector of the intent representing the relevant aspects. The vectorized data can then be used to access an according data base, which stores vectorized data. By bringing request and stored data in similar vectorized formats, data analytics using machine learning can be enhanced. Here, similar algorithms may be used as outlined above for vectorizing the data records. The request can be tokenized to obtain an initial embedding vector based on which the data base is queried for similarities. After finding similar vectors, the vectors can be combined or summarized (also referred to as "flattening") and the result can be used to interrogate the LLM. A known Python tokenizer is NLTK (Natural Language ToolKit), which provides multiple tokenizers.

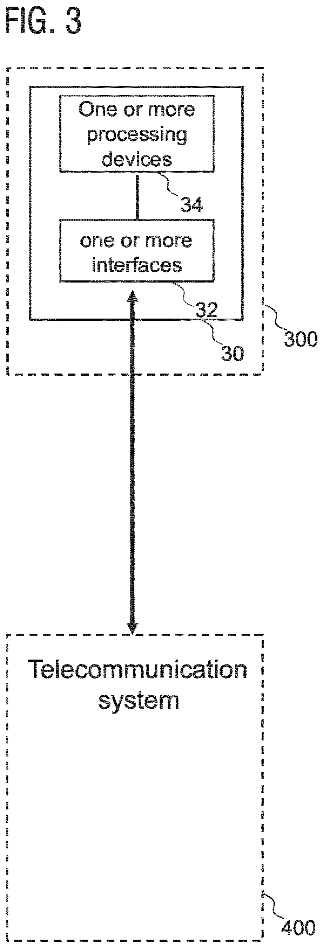

Fig. 3 illustrates a block diagram of an example of an apparatus 30 for a telecommunication system 400. The apparatus 30 comprises one or more interfaces 32, which are configured to communicate with/within the telecommunication system 400. The one or more interfaces 32 are coupled to one or more processing devices 34, which are configured to perform one of the methods (enabling machine learning-based data analytics, agent function) described herein.

As illustrated in Fig. 3, the respective one or more processing devices 34 are coupled to the one or more interfaces 32. The one or more interfaces 32 may correspond and/or be associated to one or more inputs and/or outputs for receiving and/or transmitting information, which may be in digital (bit) values according to a specified code or protocol, within a module, between modules or between modules of different entities. For example, an interface 32 may comprise interface circuitry configured to receive and/or transmit information. In examples an interface 32 may correspond to any means for obtaining, receiving, transmitting or providing analog or digital signals or information, e.g., any connector, contact, pin, register, input port, output port, conductor, lane, logical endpoint, especially based on internet protocol, IP, especially exposing an IP port and/or an API (Application Programming Interface); etc., as well as any abstraction thereof, especially based on virtualization, containerization, service abstraction, proxying, load-balancing, network address translation (NAT), cloud computing and/or serverless computing; which allows providing or obtaining a signal or information. An interface 32 may be configured to communicate (transmit, receive, or both) in a wireless or wireline manner and it may be configured to communicate, i.e., transmit and/or receive signals, information with further internal or external components. The one or more interfaces 32 may comprise further components to enable communication in a (mobile) communication system or network, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. Moreover, the one or more interfaces may be APIs in some examples.

The one or more processing devices 34 may be implemented using one or more processing units, one or more circuitries, any means for processing, such as a processor, a computer or a programmable hardware component being operable with accordingly adapted software. In other words, the described function of the one or more processing devices 34 may as well be implemented in software, which is then executed on one or more programmable hardware components. Such hardware components may comprise a general-purpose processor, a Digital Signal Processor (DSP), a micro-controller, etc. and/or an abstraction thereof.

Another example is a network node, such as a server, a computer, or a router, 300 comprising an example of the apparatus 30. The network node 300 is shown in dashed lines as it is optional from the perspective of the apparatus 30. In Fig. 3 the apparatus 30 is shown outside the telecommunication system 400, which is only an example. The apparatus 30 or the network node 300, respectively, may as well be comprised by the telecommunication system 400. Yet another example is therefore a telecommunication system 400 comprising an example of the apparatus 30.

The telecommunication system 400 may be of various types. The types of telecommunication system 400 are designed to serve specific communication needs and technologies. Fixed-line telecommunication systems are traditional systems that use copper or fiber-optic cables to transmit voice and data, commonly used in landline phone services and broadband internet. Mobile telecommunication systems operate through wireless networks, enabling communication through devices such as smartphones via cellular networks like 4G (4^{th} generation), 5G, and beyond. Satellite communication systems use satellites in orbit to transmit signals over vast distances, providing coverage in remote areas where terrestrial systems are unavailable. Radio and television broadcast systems deliver audio and video signals to large audiences using radio frequencies, typically for entertainment or public service. VoIP (Voice over Internet Protocol) systems use the internet to transmit voice calls, offering flexibility and reduced costs compared to traditional phone systems. Additionally, optical communication systems leverage light waves transmitted through fiber optics to offer high-speed data transmission over long distances with minimal signal loss. Each type of telecommunication system serves different purposes and industries, contributing to the overall infrastructure of global connectivity.

In general, a telecommunication system 400 refers to a complex network of devices, technologies, and protocols designed to enable the transmission of information over distances. This system facilitates the exchange of data, voice, video, and other forms of communication between users, typically through wired or wireless means. Key components of a telecommunication system include transmission media (like fiber optics or radio waves), switching and routing devices (such as routers and base stations), and end-user devices (like smartphones, computers, and servers). The system operates through various layers of protocols that ensure reliable, secure, and efficient communication, whether for personal, business, or governmental use. These systems are integral to modem society, supporting services such as mobile communication, internet access, satellite transmission, and broadcasting, enabling global connectivity and access to information.

A network node in a telecommunication system refers to any active, physical or logical device that is responsible for creating, receiving, or transmitting data within a network. These nodes serve as critical points of communication and data transfer, enabling the flow of information across the network. Examples of network nodes include routers, switches, base stations, servers, and user devices like smartphones and computers. Each node plays a specific role, such as directing data traffic, managing network connections, or handling user requests. In a telecommunications system, network nodes are interconnected, often forming a complex mesh that allows for efficient, scalable communication between multiple devices. These nodes can operate on different layers of the OSI (Open System Interconnection) model, from physical infrastructure to application services, and are essential for maintaining the integrity, speed, and reliability of communication networks.

A mobile communication system is a type of telecommunication infrastructure that allows users to transmit voice, data, and multimedia services wirelessly while on the move. This system operates through a network of interconnected components, including mobile devices (like smartphones and tablets), base stations (NodeBs, eNodeBs, gNodeBs), and core network elements, facilitating seamless communication across wide geographic areas. Mobile communication systems use radio frequencies to establish connections between mobile devices and base stations, which in turn connect to the broader public or private networks, such as the internet or telephony systems. Modern mobile communication systems are based on technologies like 4G LTE (Long Term Evolution) and 5G, which provide high-speed data transfer, low latency, and improved connectivity. These systems enable various services, including voice calls, text messaging, video streaming, and internet access, making them integral to personal, commercial, and industrial communication in today's interconnected world.

In examples several types of machine learning models are conceivable for the data analytics. Supervised learning models are trained on labeled data, where the input data is paired with known outputs. These models, such as linear regression, decision trees, and support vector machines (SVMs), are used for tasks like classification and regression, predicting outcomes based on past examples. Unsupervised learning models work with unlabeled data and aim to find hidden patterns or relationships. Examples include k-means clustering and principal component analysis (PCA), which are used for grouping data and dimensionality reduction, respectively. Semi-supervised learning combines both labeled and unlabeled data to improve learning when labeled data is scarce. Reinforcement learning models learn by interacting with an environment, receiving rewards or penalties for actions taken; they are often used in areas like robotics and game AI, with Q-learning being a popular algorithm. Finally, deep learning models, which are a subset of machine learning, utilize artificial neural networks with many layers to automatically learn complex patterns from large datasets, such as in image recognition or natural language processing. Each type of model is suited to different applications depending on the nature of the data and the problem at hand.

Large language models (LLMs) are a type of machine learning model designed to understand and generate human language by processing vast amounts of text data, as it is available from the incident and configuration tickets. There are several types of large language models, each with unique architectures and applications. Transformers, like GPT (Generative Pre-trained Transformers), are among the most common LLMs. They use self-attention mechanisms to process text efficiently, making them highly effective for tasks such as text generation, summarization, and translation. BERT (Bidirectional Encoder Representations from Transformers) is another popular model that excels at understanding the context of words in a sentence by reading text bidirectionally, making it ideal for tasks like question answering and sentiment analysis. T5 (Text-to-Text Transfer Transformer) frames all tasks as text-to-text problems, allowing it to handle tasks like text summarization, classification, and translation using the same underlying model. Another type is LLMs trained with reinforcement learning, such as In-structGPT, which can better align their outputs with human preferences by learning from feedback. While most LLMs are trained on general-purpose tasks, some are fine-tuned for domain-specific applications, such as legal, medical, or technical language, making them highly versatile tools for a wide range of natural language processing (NLP) tasks. In examples, the machine learning model may be a large language model, LLM, which is used to determine relevant features of the alarm for querying the data base for incident or configuration tickets related to or similar to the alarm.

In the following an example for a 3GPP (3^{rd} Generation Partnership Project) system will be detailed. Examples may provide enhanced NWDAF (Network Data Analytics Function), LLM supporting NWDAF (L-NWDAF), enhanced ADRF (Analytics Data Repository Function), L-ADRF, and an enhanced network function (L-KMF, LLM supporting Knowledge Management Function) for LLM knowledge-based automation complementation. Examples may hence provide an LLM enhanced 5G (+) core network (CN). NWDAF is a network function in 5G (+) core networks that provides data analytics to optimize network performance and enable intelligent decision-making. It collects real-time data from various network functions plus OAM (Operation and Maintenance) domain and uses AI (Artificial Intelligence) and machine learning to generate predictions for e.g. network congestion, optimized resource usage, and improving user experience.

Its main role is to support automation loops in the core network for quality of experience (QoE) enhancement, network slicing, network load optimization or mobility steering. NWDAF helps in making the 5G network more efficient, responsive, and self-optimizing.

NWDAF trains/utilizes ML/AI (Machine Leaming/Artificial Intelligence) models and algorithms in order to make predictions. Model specification is out of scope in 3GPP standards however the effect of ML/AI for the architecture (boxes and interfaces) are described in detail. For the LLM technology use cases, which impact the NWDAF, and related architecture (boxes and interfaces) are not yet specified and considered. Examples may deal with architecture and interface enhancements that make NWDAF able to provide LLM based enhanced analytics to network functions in the core network. Knowledge can either be provided by external document sources (e.g. from web) or documents written by vendors or operator staff (mainly from operations or optimization departments). Also, the 5G Core/ OAM (Operation and Maintenance) data can be structured and stored in a different way in order to be utilized by LLMs. The data is loaded, chunked and stored in a vectorized way. It is retrieved and utilized for LLM based reasoning. So overall, it impacts the architecture (boxes and interfaces) and therefore it is relevant for 3GPP standardization. The chunks or their format may depend on the respective use case and may follow specific criteria. The may be developed in a try-and-error fashion and they may depend on the level of details required for certain requests, the more details are requested the finer the chunks. The vectorization of the chunks may depend on the software framework, manufacturer. Examples are word2Vec, CBOW (Continuous Bag of Words), text-embedding-3-large, etc.

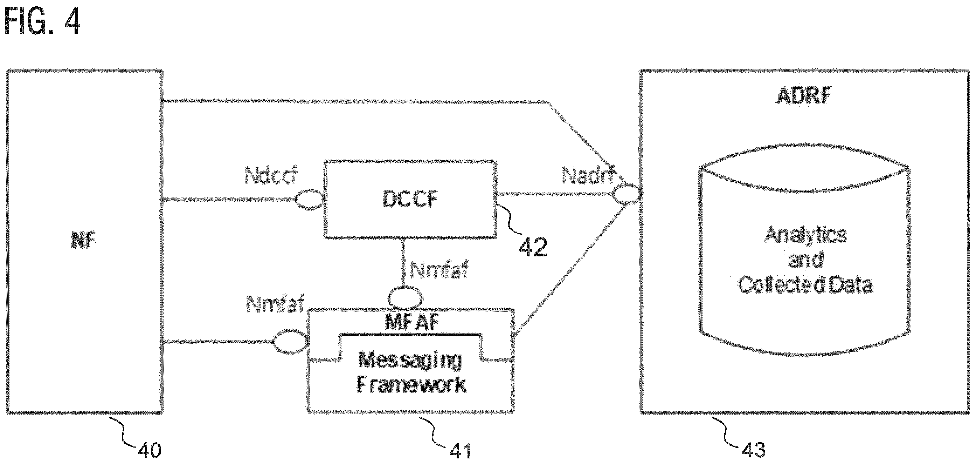

Fig. 4 depicts an overview of a data storage structure for analytics and collected data in 3GPP. Fig. 4 shows the NWDAF architecture, more details can be found in Technical Specification (TS) 3GPP TS 23.288 V19.0.0 (2024-09), Technical Specification Group Services and System Aspects; Architecture enhancements for 5G System (5GS) to support network data analytics services (Release 19).

Fig. 4 illustrates a network function (NF) 40, which interacts with a MFAF (Message Framework Adapter Function) 41 with a messaging framework via an according network MFAF (Nmfaf) interface. The NF 40 also uses a Data Collection and Coordination Function (DCCF) 42 with an according Ndccf interface. The DCCF 42 may use the MFAF 41 via Nmfaf. NF 40, MFAF 41 and DCCF 42 may access Analytics Data Repository Function (ADRF) 43 via Nadrf.

ADRFs contain non-subscription related technical and maybe nontechnical data (subscription related data is assumed to be stored in the UDM (Unified Data Management) respectively in examples in a unified vector store (UVS)). Example data can be NWDAF ML models, events, log files, transaction data, traces, analytics from 5G core or other nontechnical systems, internet related documentation, web pages, articles, blogs etc. ADRF offers services for storage and retrieval of the data (refer to Table 1) and acts as a universal store for non-subscriber related data for NWDAFs.

3GPP TS 23.288 specifies the Nadrf data management and model management services in order to maintain the collected data from many sources inside or outside 5GC (5G Core) and ML models for NWDAF. The following interface services are offered to consumers of the ADRF (refer to Table 1). ADRF services may be used to store, retrieve and delete data as well as ML models via the SBI (Service Based Interfaces).

**Table 1: NF services provided by ADRF [3GPP TS 23.288]**

| **Service Name** | **Service Operations** | **Operation Semantics** | **Example Consumer(s)** |
|---|---|---|---|
| Nadrf DataManagement | StorageRequest | Request / Response | DCCF, NWDAF, MFAF |
| | Storage SubscriptionRequest | Request / Response | DCCF, NWDAF |
| | Storage SubscriptionRemoval | Request / Response | DCCF, NWDAF |
| | RetrievalRequest | Request / Response | DCCF, NWDAF |
| | Retrieval Sub scribe | Subscribe / Notify | DCCF, NWDAF |
| | RetrievalUnsubscribe | | DCCF, NWDAF |
| | RetrievalNotify | | DCCF, NWDAF |
| | Delete | Request / Response | DCCF, NWDAF |
| Nadrf_MLModelManagement | StorageRequest | Request / Response | NWDAF |
| | RetrievalRequest | Request / Response | NWDAF |
| | Delete | Request / Response | NWDAF |

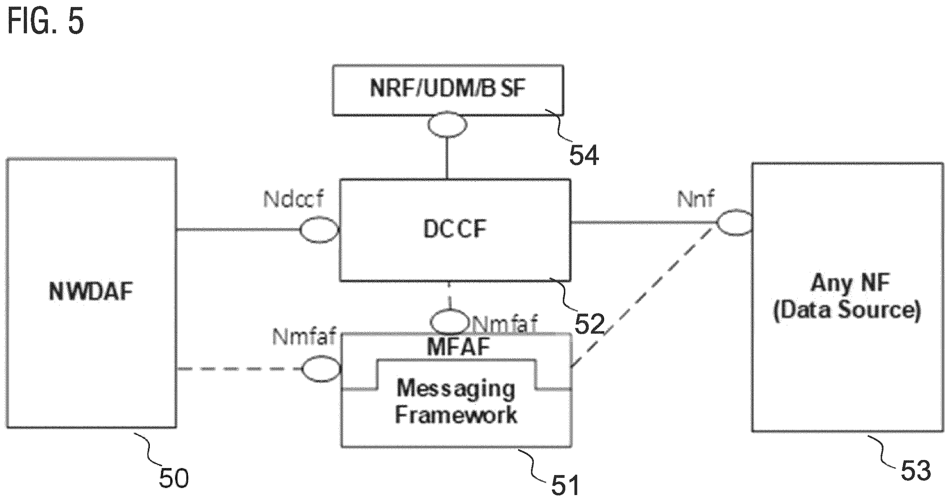

The 5G System architecture allows NWDAF to collect data from any SGC NF. The NWDAF belongs to the same PLMN (Public Land Mobile Network) as the SGC NF that provides the data (refer to Fig. 5). Fig. 5 illustrates a data collection architecture (training and inference) in line with 3GPP TS 23.288. Fig. 5 shows NWDAF 50, MFAF 51 and DCCF 52 in line with Fig. 4. Fig 5 shows another NF 53, which can be any data source, which uses an according Nnf interface. Moreover, Fig. 5 illustrates NRF/UDM/BSF (Network Repository Function/ Unified Data Management Binding Support Function). The Nnf interface is defined for the NWDAF to request subscription to data delivery for a particular context, to cancel subscription to data delivery and to request a specific report of data for a particular context. The SG-System architecture allows NWDAF to retrieve the management data from OAM by invoking OAM services. The 5G System architecture allows NWDAF to collect data from any SGC NF or OAM using a DCCF with associated Ndccf services. The 5G system architecture allows MFAF to fetch data from an NWDAF with associated Nnwdaf_ DataManagement service (refer to Table 1).

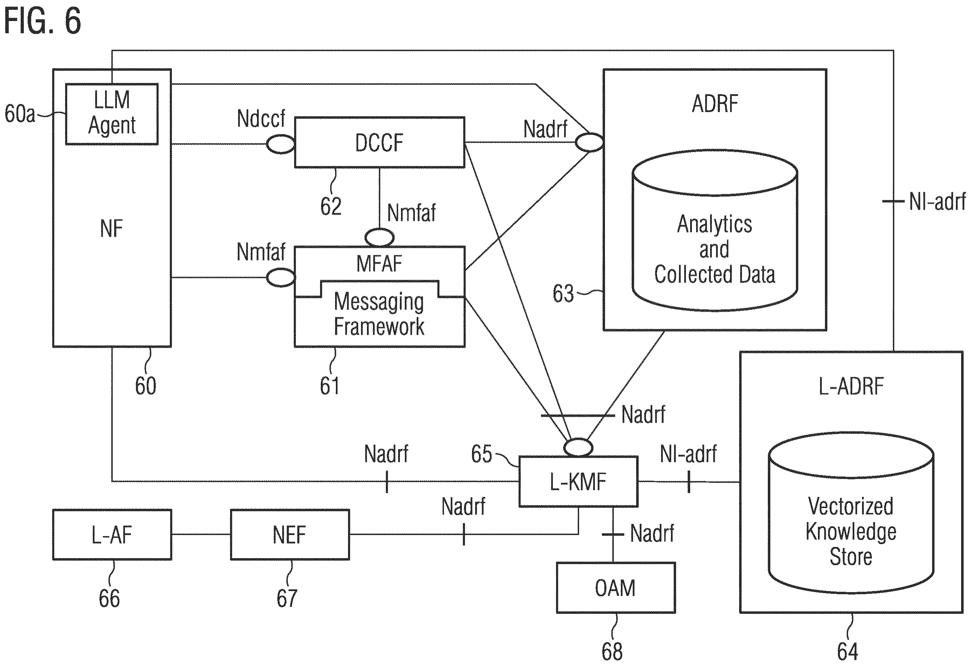

Examples provide NWDAF architecture enhancements. One of the key enhancements of the existing NWDAF architecture according to 3GPP TS 23.288 may be the introduction of a non-subscriber related vector store L-ADRF and an associated L-KMF (please refer to Fig. 6). Fig. 6 illustrates a block diagram of an example of a data storage architecture.

Fig. 6 shows a NF 60, MFAF 61, DCCF 62, and ADRF 63 in line with the above. In the present example, an LLM-Agent (Large Language Model) agent 60a is introduced to NF 60. Moreover, vectorized data can be stored in the L-ADRF 64, which has an NL-adrf interface. The L-KMF 65 processes information from L-AF (LLM supporting Application function) 66, NEF (Network Exposure Function) 67, and OAM 68. The L-KMF 65 is configured to perform an example of the method 10 as described herein and store the vectorized data in the L-ADRF 64. The LLM agent 60a is configured to perform one of the methods 20 as described herein.

These functions are not yet standardized. They support the introduction of LLM-based analytics conducted in the NWDAF. L-ADRF 64 is providing different vector storage options according to the collected data records. K-LMF 65 is a new function, which allows records to be loaded, split/chunked and vectorized for storage in the L-ADRF 64. In addition to the data collection from the 5G System data record also may be collected and loaded from application functions inside and outside (e.g. internet related information) the 5G System (via NEF 67 and L-AF 66, L-AF represents a special - maybe operator owned - AF, which acts as a GW (Gateway) in order to retrieve web-based data or documents). Hence the method 10 as described above may further comprise obtaining 12 further data records from application functions (AF) in and outside the telecommunication system and/or obtaining 12 further data records from operation and maintenance (OAM) of the telecommunication system. The obtaining 12 of the data records may comprise communicating with a gateway of the telecommunication system.

Also, OAM data 68 can be retrieved (e.g. logs, counters, events but also new data like supplier documentation, standardization specification documents or other supporting documents). NF 60 may contain LLM agents 60a (to be further explained later) for retrieval of vector embedding via NL-adrf. In this example it is assumed that only NWDAF have the capability of implement agent software in order to retrieve vector embedding data (refer again to Fig. 6). During the embedding for the respective LLM request feature vector with similar content or semantics may be combined with the input vector.

In the context of LLMs, "embedding" refers to the representation of words, phrases, or entire texts as dense vectors of real numbers in a continuous vector space. These embeddings capture the semantic meaning of the input by placing similar words or concepts closer together in the vector space, allowing the model to understand the relationships between different words based on context. Embeddings are critical for transforming textual data into a format that can be processed by the machine learning model, as raw text cannot be directly used by algorithms. In LLMs, embeddings allow the model to learn rich linguistic patterns, relationships, and nuances by understanding how words interact in various contexts. Pre-trained embeddings, such as those derived from models like Word2Vec or BERT, form the foundation of many LLMs, enabling them to generate human-like text, perform translation, answer questions, and more, based on the learned vector representations of language.

Table 2 provides the services enhancements of Nl-adrf in comparison to Nadrf. It provides SBI storage request services of vectors and also retrieval request services of vectors. It also provides the remaining housekeeping services (deletion/subscribe/notify). The L-ADRF vector format may be Word2Vec, CBOW, test-embedding-3-large, etc.

Please note: The LLM agent 60a in the NF 60 depicted in Fig. 6 is only applicable for NWDAF in this example. But generally, it can be relevant for any NF.

**Table 2: Data Collection architecture (training and inference), 3GPP TS 23.288, Nl-ADRF:**

| **Service Name** | **Service Operations** | **Operation Semantics** | **Example Consumer(s)** |
|---|---|---|---|
| Nl-adri_ DataManagement | StorageRequest | Request / Response | L-KMF |
| | Storage SubscriptionRequest | Request / Response | L-KMF |
| | Storage SubscriptionRemoval | Request / Response | L-KMF |
| | RetrievalRequest | Request / Response | NF here NWDAF (vectors) |
| | Retrieval Sub scribe | Subscribe / Notify | NF here NWDAF (vectors) |
| | RetrievalUnsubscribe | | NF here NWDAF |
| | RetrievalNotify | | NF here NWDAF |
| | Delete | Request / Response | L-KMF |

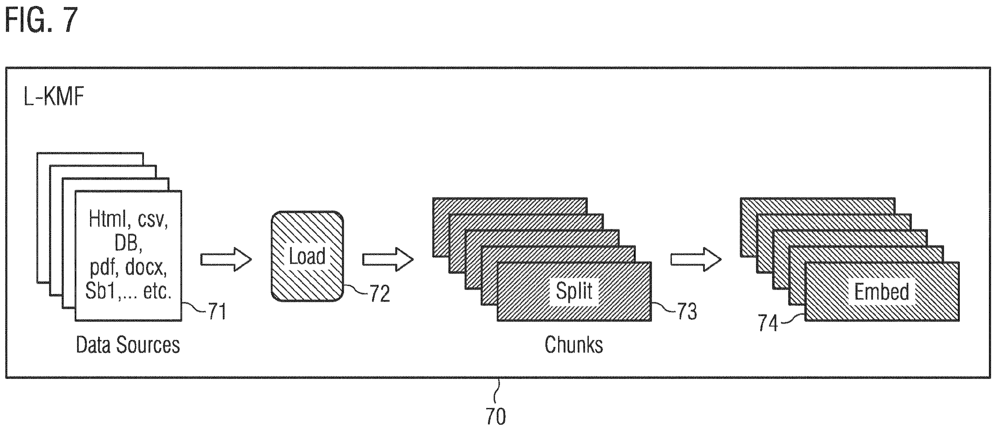

In the following details on the L-KMF 65 will be described. Fig. 7 depicts data collection and preprocessing in an example. Fig. 7 illustrates the L-KMF 70 network function. The L-KMF 70 logically belongs to the L-NWDAF and is instantiated accordingly. It basically collects records from different data sources 71 (5G system but many other data sources as explained before). E.g. it can contain and support data loaders for L-AF related data in different formats (like csv, pdf, html, json, excel, github, Google drive, xml, Wikipedia and many more). Also, operational OAM data (like logs, performance counters, events, traps etc.) can be loaded as well as non-operational OAM data (supplier technical documents, technical descriptions, standards, experiences from operational staff etc.). As shown in Fig. 7 the L-KMF 70 loads 72 the data and provides means to split 73 the received data according to the level of detail needed for LLM requests in L-NWDAF and provides vectorization 74 for later embedding during retrieval of data. In this example, the vectorizing 14 comprises splitting the data records in chunks of data, wherein the chunks of data comprise relevant vector data of the data records.

Specific queries may be formulated in NLP. This is vectorized and embeddings are added from the vector database. This results in the request for an LLM. The output is also formulated in NLP, so that the agent can convert this into appropriate tasks can be implemented in the flow logic of the NF.

The L-KMF 70 stores the vectorized data in the L-ADRF via Nl-adrf. L-KMF 70 may also be organized in different chains depending on the use case and the intent received from L-NWDAF. Fig. 7 illustrates the data collection and pre-processing in L-KMF 70.

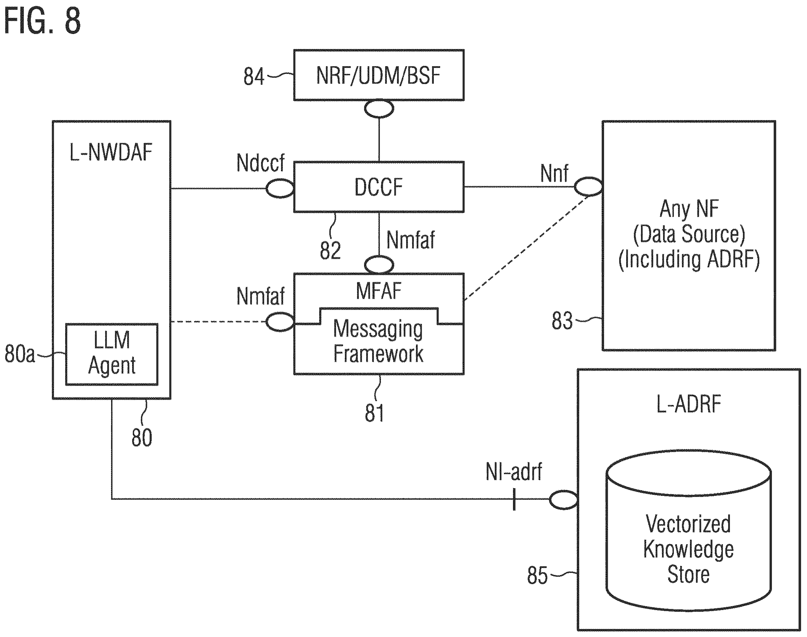

In the following L-NWDAF with LLM agent functionality will be described in more detail. Fig. 8 shows a data collection architecture in an example. Fig. 8 illustrates the introduction of a NWDAF flavor with LLM capabilities called L-NWDAF in an example. The L-NWDAF 80 comprises the LLM-Agent 80a. As shown in Fig. 8 the architecture comprises MFAF 81, DCCF 82, and NRF/UDM/BSF 84 as described above. L-NWDAF 80 uses Nl-adrf to access L-ADRF 85 with the vectorized knowledge store. The function incorporates LLM Agent functionality 80a, which provides new NWDAF internal APIs (Application Programming Interfaces) in order to conduct enhanced analytics based on the regular analytics as specified in 3GPP TS 23.288. It enhances the 3GPP analytics with an internal logic to serve intent based LLM invocation (called LLM agent). The LLM agent 80a is able to interrogate Nl-adrf in order to retrieve knowledge and similarity vectors for embedding into the LLM executed in L-NWDAF LLM agent of L-NWDAF.

The L-NWDAF 80 may utilize the knowledge and the similarities to provide better LLM results. L-NWDAF is able to consider/combine the results from the new LLM agent-based results and the existing ML/AI based predictions (as specified in 3GPP TS 23.288) in order to provide even more accurate results/recommendations to the analytics requesting NF entities.

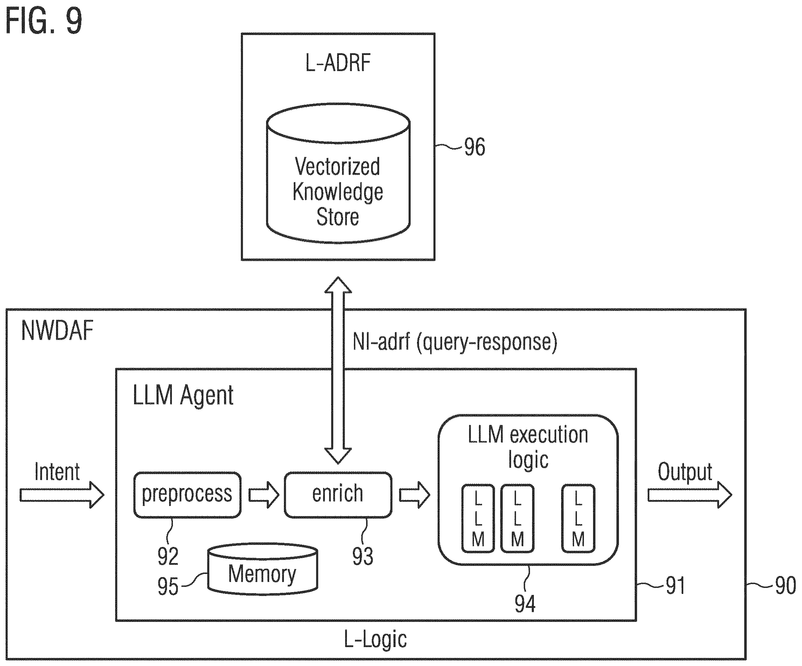

In the following further details on the L-NWDAF agent being configured to perform the method 20 will be provided. Fig. 9 illustrates an agent function 91 in an example. Fig. 9 shows an L-NWDAF 90 with L-Logic and LLM agent function 91. The LLM agent 91 comprises preprocessing 92 for an intent and enrichment 93 for the outcome of the preprocessing 92. At the enrichment stage vectorized data from the L-ADRF 96 is obtained for data enrichment. The enriched data is then processed by LLM execution logic 94 to obtain a respective output.

Fig. 9 illustrates the agent function 91 within L-NWDAF 90. It expects an intent description from the internal L-NWDAF logic. It preprocesses 92 the intent and checks it against internal templates. It extracts the most relevant aspects of the intent and vectorizes it. The vector is used to access the L-ADRF 96 vector database. L-ADRF checks the input vector against similarity information vectors (e.g. by so called cosine similarity checks). It provides a configurable number of similar vectors to the agent 91. Hence the method 10 at the L-DARF 96 comprises receiving a request from the network agent 91 function and the request comprises vectorized data about the intent of the request. The L-ADRF 96 then further processes the vectorized data in the data storage for similarities between the vectorized data about the intent and the data in the data storage. It then provides the vectorized data, which may be a configurable number of similar vectors. In some examples also historical vectors or intent information are added for interrogation by L-NWDAF 90 using a memory 95.

The agent 91 retrieves the vectors and combines all vectors (enriches the input vector according to Fig. 9) in a resulting embedding vector for the LLM invocation in order to improve the LLM results. Hence, in the present example the agent method 20 uses an LLM to obtain an analysis result for the request. the accessing 28 of the data storage further comprises receiving a configurable number of data vectors from the data storage. The data vectors fulfill a predetermined similarity criterion with respect to the vectorized data, e.g. they fulfilled a cosine similarity check threshold. The agent method 10 further comprises combining the configurable number of data vectors to obtain an embedding vector for invocation of the LLM.

The LLM may deliver the appropriate result based on the intent and may utilize different output methods (please refer to Fig. 9, LLM execution logic 94) like map-reduce, refine, map-re-rank. The final output method depends on the use case. The LLM execution logic 94 may differ from use case to use case. Also, the LLM agent 91 and even the pre-trained LLM implementation differs from use case to use case. It is to be noted that the agent 91 can handle different text intents in one analytics transaction and can utilize chains in parallel.

In summary at least some examples of the present disclosure deal with enhancements of the existing NWDAF architecture, cf. 3GPP TS 23.288. A new network function L-KMF may be introduced for data retrieval from different sources and for vectorization and serving a new interface called Ln-adrf for vector storage. A special AF called L-AF may be incorporated, which acts as a gateway in order to retrieve web-based data and or documents of different well-known formats by L-KMF in order to store them in a vectorized way. Some examples may introduce a L-ADRF for storage of vectorized data from L-KMF in a vector database in order to allow similarity search and delivery of embedding vectors for LLM utilization in the L-NWDAF agent of L-NWDAF. Examples may incorporate a new LLM agent into the NWDAF execution software logic (meaning L-NWDAF).

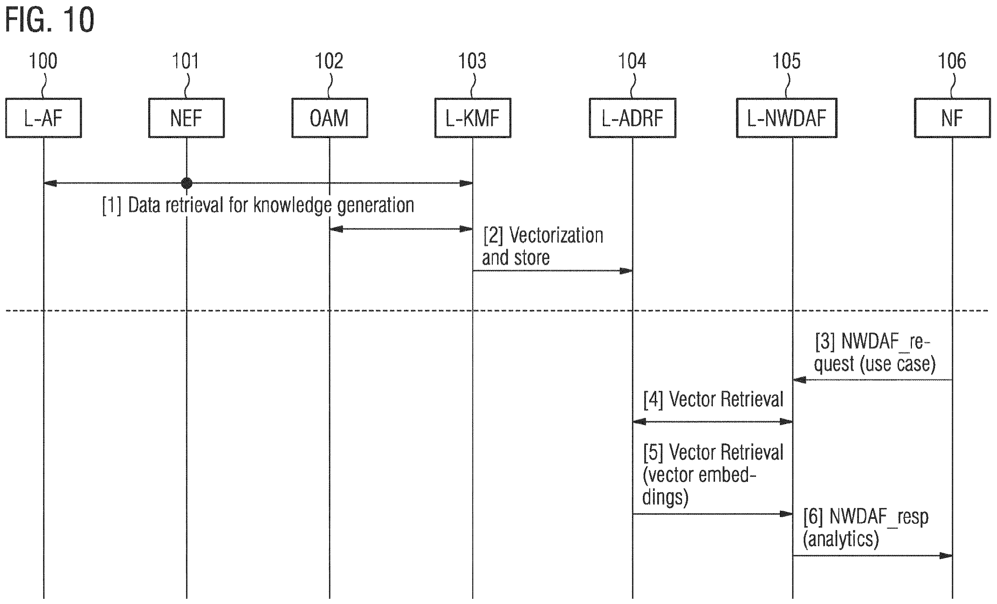

Fig. 10 depicts a message flow in an example. Fig. 10 shows an abstract message flow for enhanced L-NWDAF utilization. Fig. 10 illustrates messages exchange between L-AF 100, NEF 101, OAM 102, L-KMF 103, L-ADRF 104, L-NWDAF 105, and NF 106. In step [1] L-KMF 103 utilizes its data loaders for external sources and loads the data from different sources relevant for the use case (including L-AF 100 via NEF 101 via external data from documents, web pages etc.) L-KMF 103 splits the received data into chunks. The size of the chunks depends on the required granularity of the expected intent from L-NWDAF 105. The chunks are vectorized and stored in a vector database (Vectors of similarity are mathematically close to each other and similarity can be calculated during vector retrieval e.g. via cosine similarity calculation).

An alternative would be the same as in step [1] with the only difference being the data contents. Here the OAM 102 is interrogated, and contents could be logs, traces, events, counters and supplier documents or staff experiences for certain behaviors of the network. Documents are against split, vectorized and stored.

In step [2] storage of vectors in the vector data bae (DB) of L-ADRF 104 takes place. (Note: The data is not subscriber relevant, it is assumed to represent network specific data only. Subscriber specific vectorized data are stored in a new UVS (unified vector store).)

In step [3] the NF 106 requests analytics from the L-NWDAF 105. The L-NWDAF 105 has the logic as specified in 3GPP TS 23.288 but with the enhancement of the LLM agent. So, L-NWDAF 105 can enrich the existing mechanisms with additional knowledge in order to recommend the final analytics. It requests additional information via text-based intent. The intent is pre-processed (i.e. filtered via intent templates, vectorized).

In step [4] the L-ADRF 104 is interrogated directly in order to enrich the initial vector. Maybe also historical vectors or intent information are added for interrogation by L-NWDAF 105 (according to Fig. 9 memory box 95).

In step [5] the resulting vectors are transformed to an appropriate embedding for LLM interrogation.

In step [6] the LLM delivers an answer to the question and may be utilized in the software logic in order to complement the expected analytics output based on the additional knowledge gained across the explained chain.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), applicationspecific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (10) for enabling machine learning-based data analytics in a telecommunication system (400), the method (10) comprising
obtaining (12) data records to be analyzed from one or more network functions of the telecommunication system (400);
vectorizing (14) the data records;
storing (16) the data in a vectorized manner in a data storage; and
providing (18) the vectorized data for data analytics upon request from a data analytics function in the telecommunication system (400).

2. The method (10) of claim 1, further comprising obtaining (12) further data records from application functions in and outside the telecommunication system (400) and/or obtaining (12) further data records from operation and maintenance of the telecommunication system (400).

3. The method (10) of one of the claims 1 or 2, wherein the vectorizing (14) comprises splitting the data records in chunks of data, wherein the chunks of data comprise relevant vector data of the data records.

4. The method (10) of claim 3, wherein the data analytics are based on a large language model, LLM, and natural language processing, NLP, wherein the relevant vector data is configured to enable embedding of the vector data into an LLM.

5. The method (10) of one of the claims 1 to 4, further comprising receiving the request from a network agent function (20), wherein the request comprises vectorized data about an intent of the request.

6. The method (10) of claim 5, further comprising processing the vectorized data in the data storage for similarities between the vectorized data about the intent and the data in the data storage.

7. The method (10) of claim 6, wherein the providing (18) of the vectorized data comprises providing a configurable number of similar vectors.

8. The method (10) of one of the claims 1 to 7, wherein the vectorized manner is one out of multiple different vector formats, which are configurable by a network function and/or which depend on a format of the data records.

9. The method (10) of one of the claims 1 to 8, wherein the data records comprise subscriber and/or non-subscriber related data, wherein the obtaining (12) of the data records comprises communicating with a gateway of the telecommunication system (400).

10. A method (20) for an agent function of a telecommunication system (400), the method (20) comprising
obtaining (22) a request to analyze data from a data storage, the request comprising information about an intent of the request;
processing (24) the request to obtain information about relevant aspects of the intent;
vectorizing (26) the information about the relevant aspects;
accessing (28) a data storage based on the vectorized data.

11. The method (20) of claim 10, further comprising using an LLM to obtain an analysis result for the request.

12. The method (20) of one of the claims 10 or 11, wherein the accessing (28) further comprises receiving a configurable number of data vectors from the data storage, wherein the data vectors fulfill a predetermined similarity criterion with respect to the vectorized data.

13. The method (20) of claims 11 and 12, further comprising combining the configurable number of data vectors to obtain an embedding vector for invocation of the LLM.

14. A computer program having a program code for performing one of the methods (10; 20) of claims 1 to 13, when the computer program is executed on a computer, a processor, or a programmable hardware component.

15. An apparatus (30) for a telecommunication system (400), the apparatus (30) comprising
one or more interfaces (32) configured to communicate with the telecommunication system (400); and
one or more processing devices (34) configured to perform one of the methods (10; 20) of claims 1 to 13.

## Amended claims

### Amended claims in accordance with Rule 137(2) EPC.

1. A method (10) for enabling machine learning-based data analytics in a telecommunication system (400), the method (10) comprising
obtaining (12) data records to be analyzed from one or more network functions of the telecommunication system (400);
vectorizing (14) the data records;
storing (16) the data records in a vectorized manner in a data storage; and
providing (18) the vectorized data for data analytics upon request from a data analytics function in the telecommunication system (400), wherein the providing (18) of the vectorized data comprises providing a configurable number of similar vectors;
wherein the vectorizing (14) comprises splitting the data records in chunks of data, wherein the chunks of data comprise relevant vector data of the data records,
wherein the data analytics are based on a large language model, LLM, and natural language processing, NLP, wherein the relevant vector data is configured to enable embedding of the vector data into an LLM.

2. The method (10) of claim 1, further comprising obtaining (12) further data records from application functions in and outside the telecommunication system (400) and/or obtaining (12) further data records from operation and maintenance of the telecommunication system (400).

3. The method (10) of one of the claims 1 or 2, further comprising processing the vectorized data in the data storage for similarities between the vectorized data about the intent and the data in the data storage.

4. The method (10) of one of the claims 1 to 3, wherein the vectorized manner is one out of multiple different vector formats, which are configurable by a network function and/or which depend on a format of the data records.

5. The method (10) of one of the claims 1 to 4, wherein the data records comprise subscriber and/or non-subscriber related data, wherein the obtaining (12) of the data records comprises communicating with a gateway of the telecommunication system (400).

6. A method (20) for an agent function of a telecommunication system (400), the method (20) comprising
obtaining (22) a request to analyze data from a data storage, the request comprising information about an intent of the request;
processing (24) the request to obtain information about relevant aspects of the intent;
vectorizing (26) the information about the relevant aspects to determine vectorized data;
accessing (28) the data storage based on the vectorized data
the method (20) further comprising using an LLM to obtain an analysis result for the request, wherein the accessing (28) further comprises receiving a configurable number of data vectors from the data storage, wherein the data vectors fulfill a predetermined similarity criterion with respect to the vectorized data and further comprising combining the configurable number of data vectors to obtain an embedding vector for invocation of the LLM.

7. A computer program having a program code for performing one of the methods (10; 20) of claims 1 to 6, when the computer program is executed on a computer, a processor, or a programmable hardware component.

8. An apparatus (30) for a telecommunication system (400), the apparatus (30) comprising
one or more interfaces (32) configured to communicate with the telecommunication system (400); and
one or more processing devices (34) configured to perform one of the methods (10; 20) of claims 1 to 6.
